# EUROPEAN PATENT APPLICATION

(11) **EP 1 344 565 A1**
(43) Date of publication of application: **17.09.2003**
(21) Application number: 02251774.2
(22) Date of filing: 13.03.2002
(51) Int. Cl.: B01L 3/02, G01N 35/10, B05B 9/047, B05B 17/06

(54) **Low volume droplet dispensing**

(71) Applicant: The Automation Partnership (Cambridge) Limited, Royston, Hertfordshire SG8 5WY (GB)
(72) Inventor: Bargh, Adran Neil, London N8 7LS (GB)
(74) Representative: Brunner, Michael John

(57) **Abstract**

A low volume dispensing apparatus has a droplet dispensing assembly **5** having a cylinder **51** for containing a fluid to be dispensed and having a nozzle **2** at one end. Extending through the other end is a piston **52,54.** A driving device **8** is connected to the piston and cylinder to move the piston relatively outwardly or inwardly along the cylinder to draw fluid into the cylinder through the nozzle or to provide fluid to the nozzle for dispensing therefrom. An impulse driver **7** connected to the droplet dispensing assembly or to the driving device to dispense fluid from the cylinder through the nozzle in a pulsed manner. A sensor **102** may be used to sense the position of the dispensing apparatus relative to the individual wells **100** in a sample plate **104** into which liquid is to be dispensed.

## Description

The present invention relates to a low volume dispensing apparatus and, particularly, to a low volume dispensing apparatus for dispensing very small quantities of reagents and the like for use in chemical or biological analysis.

As automated systems for chemical and biological analysis become increasingly important, there is a growing need for apparatus which can rapidly and accurately dispense very small quantities of liquids as droplets. One such system is disclosed in WO-A-97/16251 which discloses a pipetting needle which is fed with liquid, via a tube, from a syringe having a piston and piston drive, together with an impulse generator arranged to act on liquid in the tube to cause it to be dispensed from the pipetting needle when an impact is applied to the tube.

Difficulties potentially arise with such a system in that, providing flexibility for the impacts on the tube to operate to drive liquid from the pipetting needle, requires flexibility within the tube and this, in turn, can lead to inaccuracy in controlling, very precisely, the amount of liquid to be dispensed.

The present invention is aimed at providing a system which more accurately produces droplets of a minute size.

According to the present invention there is provided a low volume dispensing apparatus including
a droplet dispensing assembly having
   a cylinder for containing a fluid to be dispensed having a nozzle at one end and, extending through the other end, a piston;
a driving device connected to the piston and cylinder to move the piston relatively outwardly or inwardly along the cylinder to draw fluid into the cylinder through the nozzle or to provide fluid to the nozzle for dispensing therefrom; and
an impulse driver connected to the droplet dispensing assembly or to the driving device to dispense fluid from the cylinder through the nozzle in a pulsed manner.

The impulse driver is preferably arranged to drive the piston and cylinder relative to one another in a pulsed manner and may be connected between the driving device and the dispensing assembly. The impulse driver may be connected to the piston or to the cylinder.

A supply channel is preferably connected to the cylinder, through which fluid may be supplied directly to the cylinder in use, and the driving device is connected to the impulse driver to move the piston outwardly or inwardly along the cylinder to draw fluid into the cylinder through the supply channel or to provide fluid to the nozzle for dispensing by the impulse driver respectively. The driving device may be connected to the supply channel to supply fluid to the cylinder in use.

A valve may be disposed between the nozzle and the piston, movable between a first position in which the supply channel is in communication with that part of the cylinder between the valve and the piston and a second position in which the supply channel is closed and that part of the cylinder between the valve and the piston is in communication with the nozzle. Preferably a fluid reservoir is connected to the supply channel.

The impulse driver may comprise a piezoelectric actuator, a pneumatic actuator, a solenoid actuator or the like.

The driving device may include a screw-thread drive or other step-less drive.

A seal is preferably provided between the piston and the cylinder.

The apparatus may include a plurality of droplet dispensing assemblies, wherein the cylinders of the dispensing apparatus are connected to a common manifold for fluid to be dispensed and the pistons extend through the manifold. The manifold may be connected to a supply line which is selectively engageable with the manifold.

According to a further aspect of the invention there is provided a low volume dispensing apparatus including
a droplet dispensing assembly arranged to be moved transversely across a sample plate having a plurality of wells or micro-tubes and to dispense droplets of liquid into the wells or micro-tubes;
a sensor positioned adjacent the droplet dispensing assembly and arranged to sense the location of the wells or micro-tubes or the dividing walls or the like therebetween and to provide a trigger signal indicative thereof; and
a circuit for actuating dispensing by the droplet dispensing assembly on receipt of the trigger signal.

Examples of devices constructed in accordance with the present invention will now be described with reference to the accompanying drawings in which:-
Figure 1 illustrates, diagrammatically, a first example of a dispensing apparatus;
Figure 2 illustrates stages in the operation of the first example;
Figure 3 illustrates a second example;
Figure 4 illustrates a modified version of the second example;
Figure 5 illustrates another modified version of the second example;
Figure 6 illustrates a further modified version of the second example;
Figures 7A and 7B illustrate stages in the operation of the modified example;
Figure 8 illustrates a further example;
Figures 9A and 9B illustrate stages in the operation of the example shown in Figure 8;
Figure 10 illustrates a further example similar to that shown in Figure 8; and
Figure 11 illustrates a still further modification to the apparatus of Figure 3.

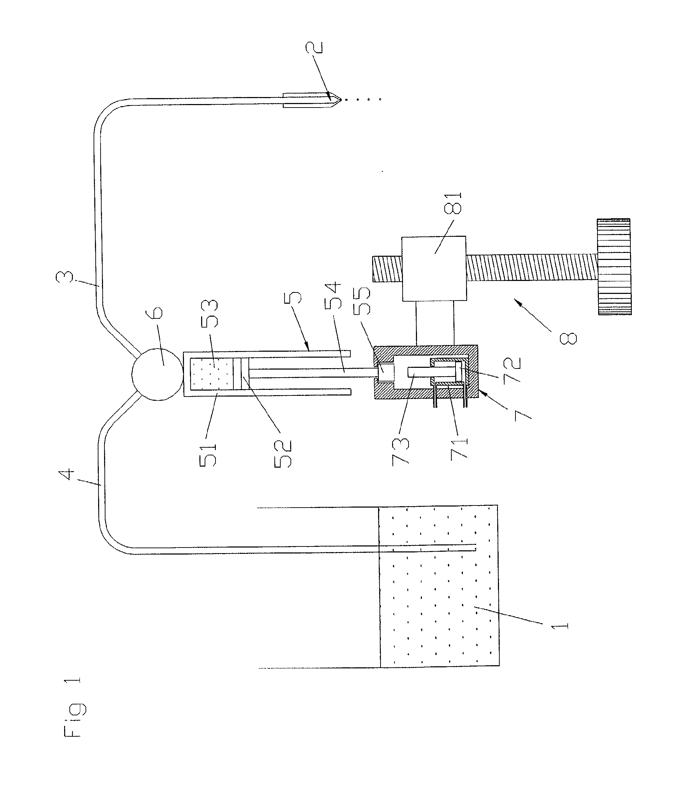

Diagrammatically illustrated in Figure 1 are a liquid reservoir 1, a pipetting nozzle 2 connected to the liquid reservoir 1 by means of two sections of tubing 3, 4 which are preferably inelastic and which are connected, in turn, to a cylinder and piston arrangement 5 through a 3-port (three way) valve 6. The cylinder and piston arrangement 5 has a cylinder 51 and a piston 52 which together provide a volume 53 for liquid from the reservoir 1. The 3-port valve 6 can open the volume 53 either to the tube 4 or to the tube 3.

The piston 52 has a piston rod 54 which extends to an impulse drive 7 which is mounted, in turn, on a screw-thread (or similar) drive 8. The impulse drive 7 has, for example, a cylinder 71 and a piston 72 with a drive rod 73 which can be driven, pneumatically, for example to impact against a piston rod head 55 at the opposite end of the piston rod 54 to the piston 52 and by so doing, when the three way valve 6 is open to the tube 3, causes the expulsion of minute amounts of liquid from the pipetting nozzle 2.

The screw-thread drive 8, carries the impulse driver or drive unit 7 and, together with it, the piston rod 54 and the piston 52 so that, by operation of the screw-thread drive 8 to move the support 81, which carries the impulse drive 7, downwardly, when the three way valve 6 is open via the tube 4 to the reservoir 1, liquid can be drawn in to the cylinder and piston assembly 5.

The device is intended to be supported on a transport mechanism to enable dispensing selectively into sample tubes (such as the wells or micro-tubes in a conventional micro-titre plate) as required. The transport mechanism *per se* is not shown in the drawings as it forms no part of the present invention.

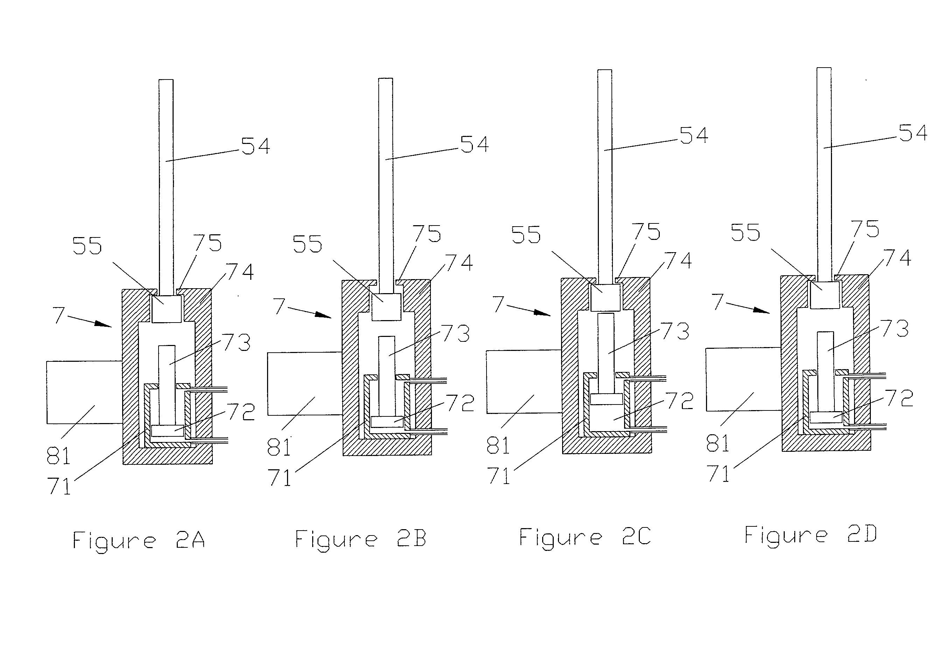

Figures 2A to 2D illustrate stages in the operation of the dispensing apparatus. In Figure 2A the piston rod head 55 is shown fully engaged with the end of the housing 74 in which are located the impulse drive cylinder 71, piston 72 and drive rod 73 and is the start point of a dispense cycle. From the position shown in Figure 2A, the screw-thread drive 8 is operated to move the impulse drive slightly upwardly relative to the piston and cylinder assembly 5 and, as a result, the piston rod end 55 is removed from the seat 75 on which it sits in a position shown in Figure 2A, the distance between the seat 75 and the piston rod head 55 being accurately controlled by the screw-thread drive 8 (Figure 2B).

To cause the dispensing of a precisely controlled amount liquid from the pipetting nozzle 2, the drive rod 73 is moved rapidly upwards between the position shown in Figure 2B and the position shown in Figure 2C, to drive the piston rod 54 upwards, until the piston rod head 55 re-engages the seat 75 and in so doing, as will be appreciated by referring to Figure 1, moving the piston 52 upwards and driving liquid from the liquid volume 53, through the three way valve 6 and the tube 3 and out of the end of the pipetting nozzle 2. The impulse drive piston 72 is then retracted to the start position as is shown in Figure 2D and the screw-thread drive 8 then moves the support 81 upwards, effectively lowering the piston rod head 55 inside the impulse drive unit 7, to allow another dispense cycle to be initiated.

It will be appreciated that a combination of the screw drive 8, which, in effect, provides a driving device to control the amount of liquid in the liquid volume 53 by either drawing it in to the volume 53 from the reservoir 1 or else (if desired) moving it back to the reservoir 1, and by using it to fix the distance of travel of the piston rod 54, very accurate control of the amount of liquid dispensed can be achieved.

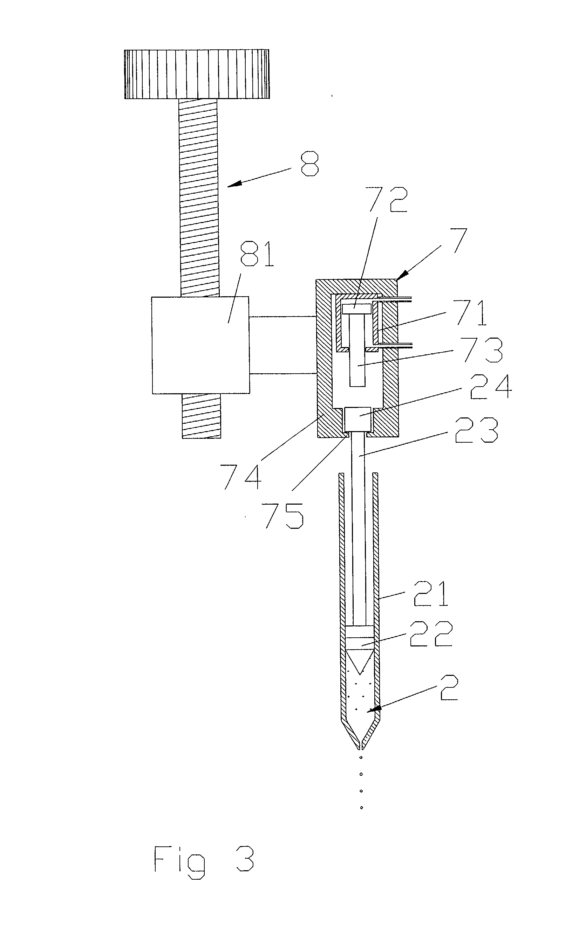

Figure 3 illustrates a second example in which liquid to be dispensed is drawn directly into a pipetting nozzle or needle 2 by dipping the needle 2 into the liquid. In this example, the pipetting nozzle 2 has a cylindrical wall 21 which contains, as a close fit a piston 22. The piston may carry a piston seal (not shown) or else a seal may be provided at the top end (as shown in the figure) of the cylindrical wall 21, engaging the side of a piston rod 23 which is connected to the piston 22. At the opposite end of the piston rod 23 a piston rod head 24 is located within an impulse drive unit 7 which is substantially the same as that shown in Figures 1 and 2 and which operates in a substantially identical fashion and which is again carried by a screw-threaded drive 8.

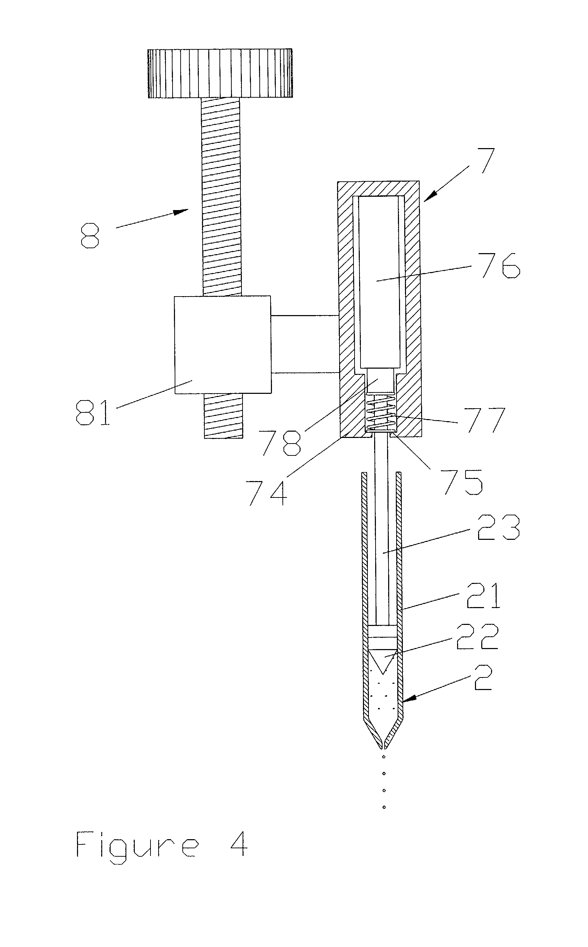

In a modification of the Figure 3 example, shown in Figure 4, the impulse drive unit of Figure 3 is replaced with a impulse drive unit 7 which includes a piezoelectric actuator 76 having a head 24 which is connected to the piston rod 23, the actuator 76 being biassed by a coil spring 77 away from the seat 75. Actuation of the piezoelectric actuator 76 drives the piston 22 to dispense a droplet as before. The coil spring 77 maintains the actuator 76 in contact with the piston rod head 24.

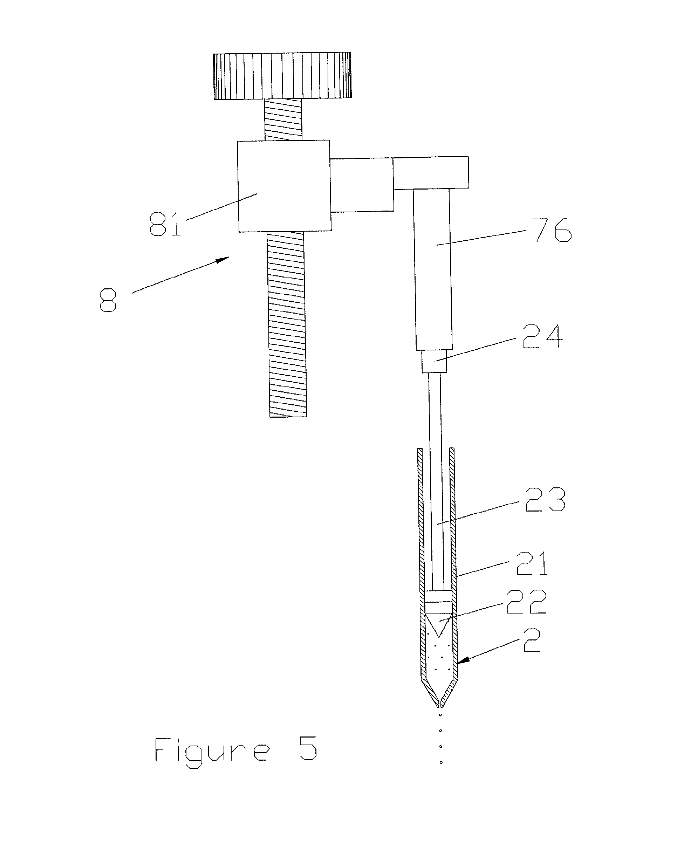

In a further modification of the Figure 4 example, shown in Figure 5, the piezoelectric actuator 76 is directly connected to the head 24 of the piston rod 23.

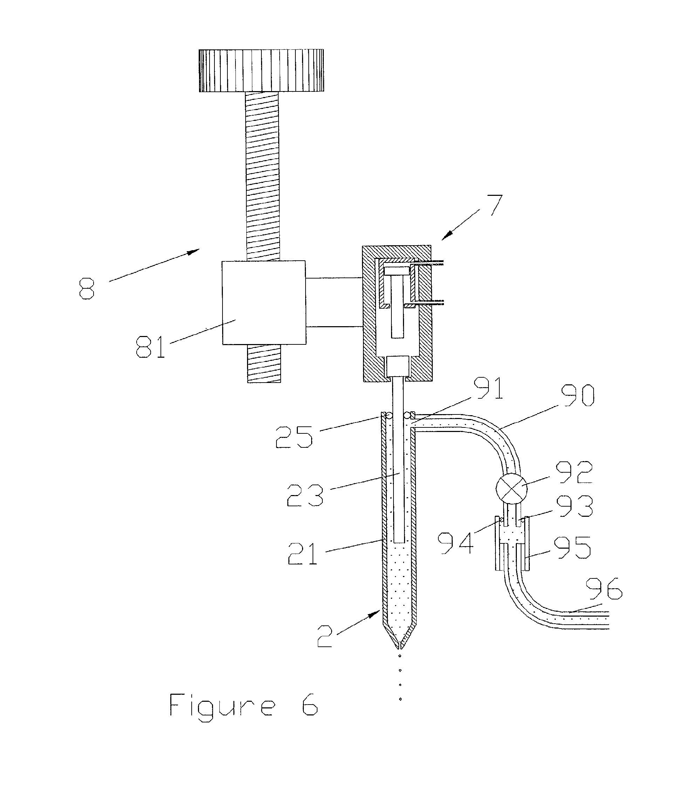

In a further modification of the Figure 3 example, shown in Figure 6, fluid is supplied to the pipetting nozzle 2 via a supply conduit 90 connected to a port 91of the cylinder 21 and the piston rod 23 is sealed to the top of the cylinder 21 by a seals 26, the piston 22 being combined with the piston rod 23 and not having an enlarged head engaging the wall of the cylinder 21. A non-return valve 92 is provided in the supply conduit 90 and the conduit end 93 extends substantially parallel with the cylinder 21 and has a telescopic connection, via seals 94 disposed in a housing 95, with a supply pipe 96, so as to connect the pipetting nozzle 2 to the supply pipe 96, selectively when the nozzle 2 is moved to a feed location.

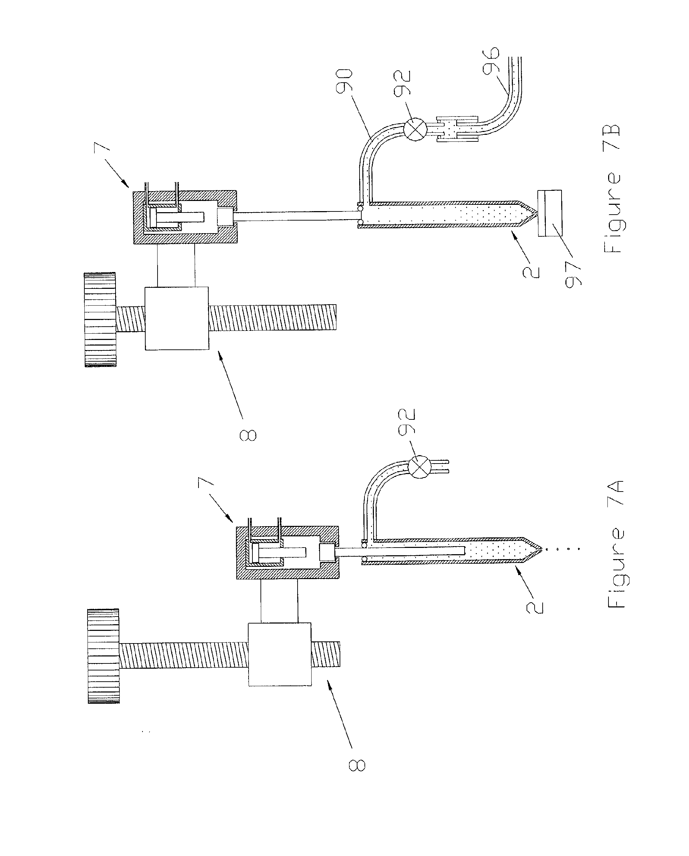

Operation of the example shown in Figure 6 is shown in Figures 7A & 7B. In Figure 7A, the non-return valve 92 is held closed and dispensing proceeds in substantially the same manner as in the previous examples. In order to allow refilling (or the flushing through for cleaning purposes) of the nozzle 2, the non-return valve 92 is opened, a resilient closure 97 is moved into position to seal the end of the pipetting nozzle 2 and then the screw-thread drive 8 is operated to move the piston/piston rod 22/23 upwardly to the position shown in Figure 7B, drawing in liquid through the conduit 90 and the supply pipe 96, so that a new dispense (or else a washing/cleaning) mode of operation can then be started after the valve 92 has again been closed.

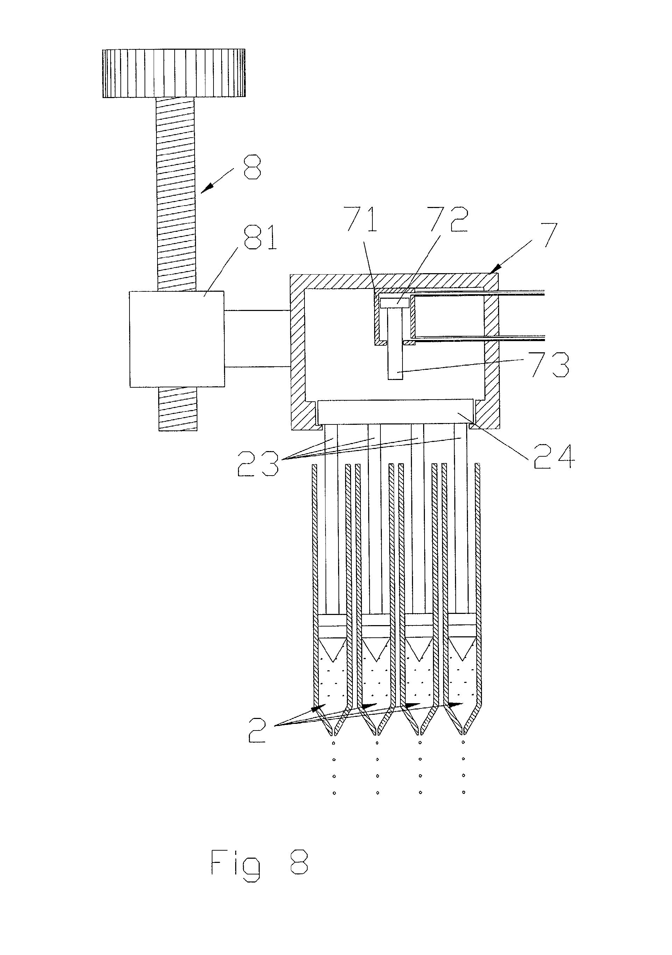

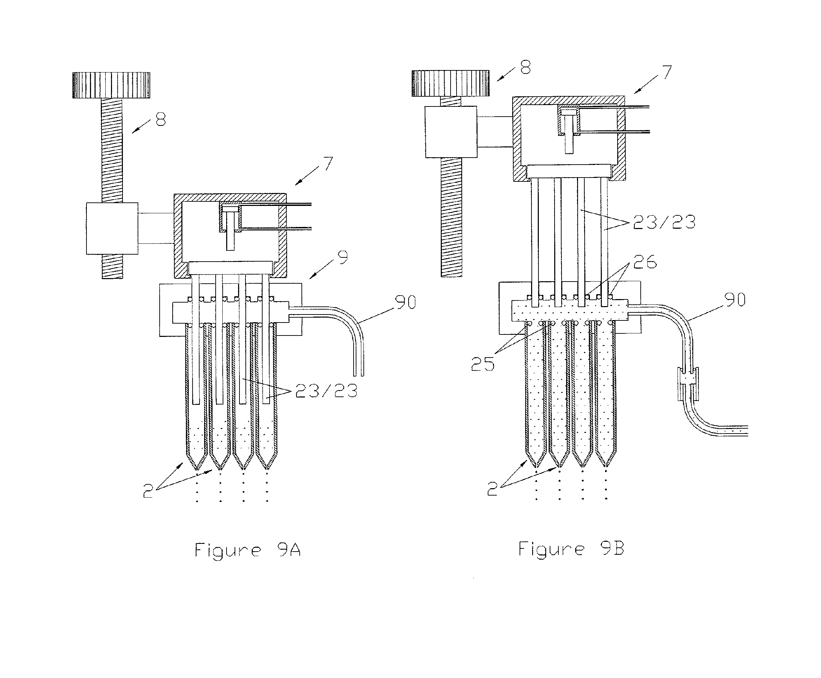

In a modification of the example of Figure 3, shown in Figure 8, multiple pipetting nozzles 2 are shown with their respective piston rods 23 connected to a common head 24 disposed within a modified impulse drive unit 7. As before, the impulse drive unit 7 has a drive rod 73 connected to a piston 72 which can be driven within a cylinder 71. The impulse drive unit 7 is again mounted on a screw-thread drive 8. Although it is envisaged that the examples of Figures 3 and 4 may be operated by dipping the nozzles 2 into the required liquid and then operating the screw-drive 8 to lift the impulse drive 7, carrying with it, the piston rods 23 and pistons 22 in order to draw liquid into the pipetting nozzles 2, in an alternative, showing Figures 9A and 9B, liquid may be provided to a common manifold connecting the pipetting nozzles 2.

In Figures 9A and 9B the pipetting nozzles 2 are shown connected into a common manifold 9 and to which fluid can be supplied under pressure through an input conduit 90 in the same manner as described above in connection with Figures 6, 7A & 7B. The device shown in Figures 9A and 9B again differs somewhat from the examples of Figures 3 to 5 in that the pistons 22 and piston rods 23 are integral to the extent that the piston 22 does not have an expanded diameter in comparison with the corresponding piston rod 23 and in this case seals 25 are provided at the top of each of the pipetting nozzles 2 and seals 26 are provided the opposite side of the manifold 9 . In this example, as in the example of Figures 6, 7A & 7B, as the pistons 22, 23 are raised by the screw -thread drive 8 to the position shown in Figure 9B, liquid is drawn into the manifold 9 and hence into the pipetting nozzles 2 and thereafter the pistons 22, 23 are inserted through the tops of the pipetting nozzles 2 by the action of the screw-thread drive 8. The impulse drive unit 7 can then be operated as before, in order to cause predefined amounts of liquid to be dispensed from the plural pipetting nozzles either for dispensing of a liquid reagent or for washing purposes as illustrated in Figure 9B.

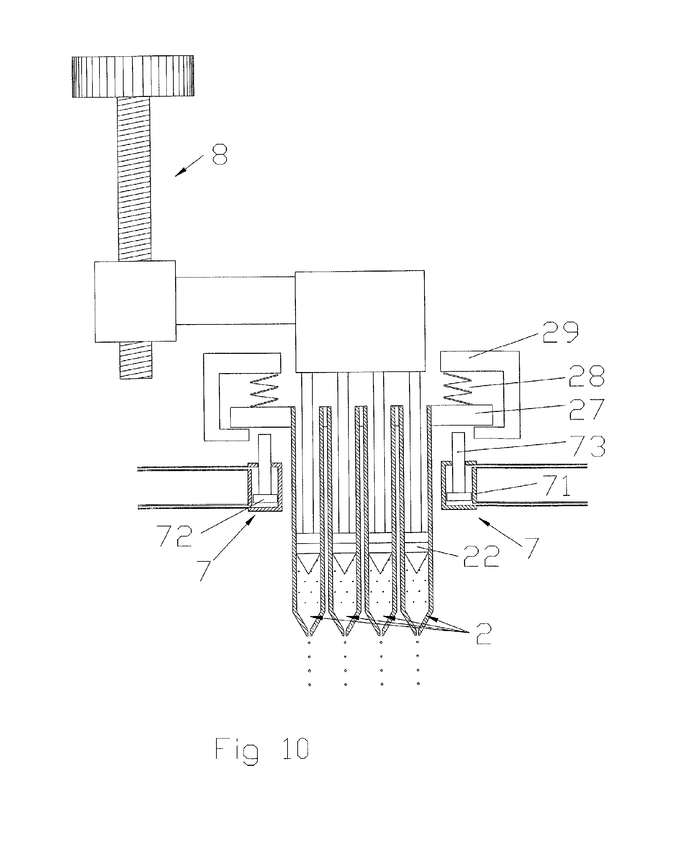

Figure 10 illustrates a still further example, similar to that of Figure 8, but in which, instead of impacting the piston 22 within each pipetting nozzle 22 the pipetting nozzles are mounted on a carriage 27 which is supported against the bias of a spring 28 within a support 29 and the impulse drive unit 27 plural pistons 72 and cylinders 71 with associated drive rods 73 which are caused to impact against the carriage 27 to cause liquid to be dispensed through the pipetting nozzles 2.

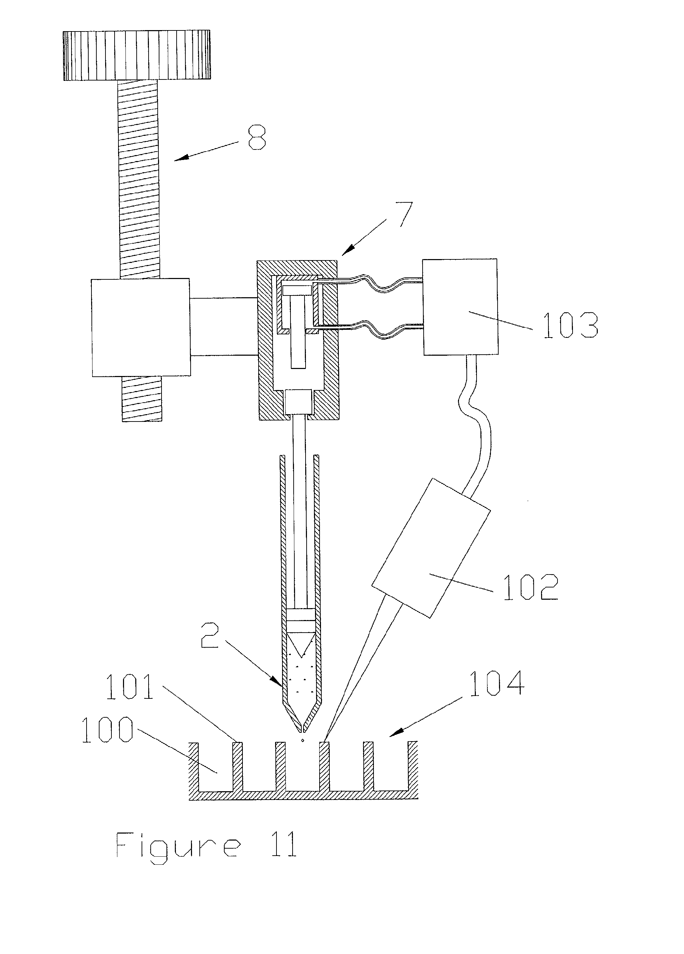

Figure 11 illustrates a further modification of the example shown in Figure 3, in which, additionally, an optical (eg infra-red) sensor 102 is used to locate the position of dividing walls 101, which separate individual wells 100 in a sample plate 104 into which liquid is to be dispensed from the pipetting nozzle 2 of the apparatus as the nozzle 2 is moved over the wells 100, and to provide a trigger signal to a circuit 103 to actuate the impulse driver 7 to cause a droplet to be dispensed into the adjacent well 100. This is useful to overcome the tolerances or variations which occur in the size and spacing of the wells 100 (or micro-tubes) in a typical micro-titre sample plate, by sensing the positions of the dividing walls or the like and relating this to the position of the nozzle 2 to trigger dispensing into the adjacent well 100, rather than relying on the spacing between wells being absolutely uniform and advancing the nozzle across the sample plate in a series of fixed steps at each of which a droplet is dispensed.

A similar sensor may be used in connection with any of the examples shown above.

## Claims

1. A low volume dispensing apparatus including
a droplet dispensing assembly having
a cylinder for containing a fluid to be dispensed having a nozzle at one end and, extending through the other end, a piston;
a driving device connected to the piston and cylinder to move the piston relatively outwardly or inwardly along the cylinder to draw fluid into the cylinder through the nozzle or to provide fluid to the nozzle for dispensing therefrom; and
an impulse driver connected to the droplet dispensing assembly or to the driving device to dispense fluid from the cylinder through the nozzle in a pulsed manner.

2. Apparatus according to claim 1, wherein the impulse driver is arranged to drive the piston and cylinder relative to one another in a pulsed manner.

3. Apparatus according to claim 2 wherein the impulse driver is connected between the driving device and the dispensing assembly.

4. Apparatus according to claim 2 or claim 3, wherein the impulse driver is connected to the piston.

5. Apparatus according to claim 2 or claim 3, wherein the impulse driver is connected to the cylinder.

6. Apparatus according to claim 1, further including a supply channel connected to the cylinder, through which fluid may be supplied directly to the cylinder in use, and wherein the driving device is connected to the impulse driver to move the piston outwardly or inwardly along the cylinder to draw fluid into the cylinder through the supply channel or to provide fluid to the nozzle for dispensing by the impulse driver respectively.

7. Apparatus according to claim 1, further including a supply channel connected to the cylinder, through which fluid may be supplied directly to the cylinder in use, and wherein the driving device is connected to the supply channel to supply fluid to the cylinder in use.

8. Apparatus according to any of claims 1 to 7, further including a valve disposed between the nozzle and the piston, and movable between a first position in which the supply channel is in communication with that part of the cylinder between the valve and the piston and a second position in which the supply channel is closed and that part of the cylinder between the valve and the piston is in communication with the nozzle.

9. Apparatus according to claim 6, or to claim 7 or claim 8 when dependent on claim 6, further including a fluid reservoir connected to the supply channel.

10. Apparatus according to any of claims 1 to 9, wherein the impulse driver comprises a piezoelectric actuator.

11. Apparatus according to any of claims 1 to 9, wherein the impulse driver comprises a pneumatic actuator.

12. Apparatus according to any of claims 1 to 9, wherein the impulse driver comprises a solenoid actuator.

13. Apparatus according to any of claims 1 to 12, wherein the driving device includes a screw-thread drive.

14. Apparatus according to any of claims 1 to 13, further including a seal between the piston and the cylinder.

15. Apparatus according to any of claims 1 to 14, having a plurality of droplet dispensing assemblies, wherein the cylinders of the dispensing apparatus are connected to a common manifold for fluid to be dispensed and the pistons extend through the manifold.

16. Apparatus according to claim 15, wherein the manifold is connected to a supply line.

17. Apparatus according to claim 15 or claim 16, wherein the supply line is selectively engageable with the manifold.

18. Apparatus according to any of claims 1 to 17, further including
a sensor positioned adjacent the droplet dispensing assembly and arranged to sense the location of wells or micro-tubes in a sample plate, or the dividing walls or the like therebetween, and to provide a trigger signal indicative thereof; and
a circuit for actuating dispensing by the droplet dispensing assembly on receipt of the trigger signal.

19. A low volume dispensing apparatus including
a droplet dispensing assembly arranged to be moved transversely across a sample plate having a plurality of wells or micro-tubes and to dispense droplets of liquid into the wells or micro-tubes;
a sensor positioned adjacent the droplet dispensing assembly and arranged to sense the location of the wells or micro-tubes or the dividing walls or the like therebetween and to provide a trigger signal indicative thereof; and
a circuit for actuating dispensing by the droplet dispensing assembly on receipt of the trigger signal.
